(19) Europäisches Patentamt
European Patent Office
Office européen des brevets

(11) **EP 2 061 029 A2**

(12) **EUROPEAN PATENT APPLICATION**

(43) Date of publication:
**20.05.2009 Bulletin 2009/21**

(51) Int Cl.:
*G11B 7/0065* (2006.01)   *G03H 1/26* (2006.01)
*G11B 7/135* (2006.01)

(21) Application number: **08010717.0**

(22) Date of filing: **12.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.06.2007 JP 2007156460**
**19.03.2008 JP 2008072018**

(71) Applicant: **Sharp Kabushiki Kaisha**
**Osaka-shi, Osaka 545-8522 (JP)**

(72) Inventor: **Nakamura, Atsushi**
**Nara-shi, Nara 631-0033 (JP)**

(74) Representative: **Müller - Hoffmann & Partner**
**Patentanwälte**
**Innere Wiener Strasse 17**
**81667 München (DE)**

(54) **Hologram element deflecting optical beam, hologram element fabricating apparatus, hologram element fabricating method, deflection optical unit, and information recording apparatus and information reconstructing apparatus using deflection optical unit**

(57)     An optical beam (104) emitted from a laser light source (105) is converted by a spatial filter (106) to have a desired beam diameter, and converted by a collimate lens (107) into a collimated beam. The optical beam (104) rendered to be a collimated beam has its intensity adjusted by an ND filter (128) The optical beam (104) having its intensity adjusted is lead by a mirror (109) to an angle rotation mirror (101). The angle rotation mirror (101) reflects the optical beam (104) toward a hologram element (102). Holograms are recorded on the hologram element (102) in advance, so that reconstructed beams (103a-103c) are collected at a prescribed position irrespective of an incident position of the optical beam (104).

FIG.1

**Description**

This nonprovisional application is based on Japanese Patent Application No. 2007-156460 filed on June 13, 2007 and Japanese Patent Application No. 2008-072018 filed on March 19, 2008 with the Japan Patent Office, the entire contents of which are hereby incorporated by reference.

BACKGROUND OF THE INVENTION

Field of the Invention

The present invention relates to a hologram element, a hologram element fabricating apparatus, a hologram element fabricating method, a deflection optical unit, an information recording apparatus, and an information reconstructing apparatus. More specifically, the present invention relates to a hologram element that deflects an optical beam, a hologram element fabricating apparatus and a hologram element fabricating method for fabricating a hologram element, a deflection optical unit for deflecting an optical axis of a reference beam using a hologram element, and an information recording apparatus and information reconstructing apparatus using a deflection optical unit.

Description of the Background Art

In recent years, there has been provided a hologram recording and reconstructing apparatus for recording and reconstructing a large amount of data using the hologram technique (for example, see J. Ashley et al., "Holographic Data Storage", IBM, J. RES. DEVELOP, VOL. 44, NO. 3, May 2000). In the holographic recording and reconstructing apparatus, a scheme of multiplex recording is used for improving recording density. This is different from the conventional hologram recording in that many independent pages are recorded at one portion. Such a multiplex recording scheme representatively includes angular multiplex recording, shift multiplex recording, phase-code multiplex recording and the like Other various schemes are known, such as speckle multiplexing.

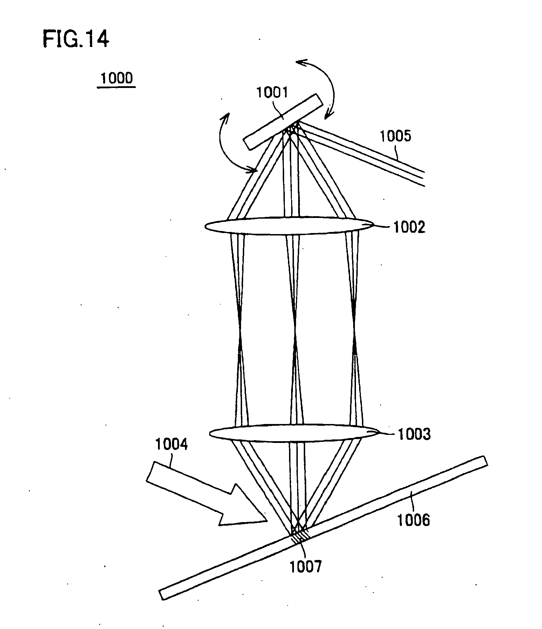

Fig. 14 is a schematic configuration diagram partially showing a configuration of conventional hologram recording and reconstructing apparatus 1000.

Referring to Fig. 14, conventional hologram recording and reconstructing apparatus 1000 includes a scan mirror 1001, and lenses 1002, 1003 constituting a 4f optical system. Hologram recording and reconstructing apparatus 1000 records information on a hologram recording material (hologram recording medium) 1006 by the angular multiplex recording scheme.

A laser beam emitted from a not-shown laser light source is split into a signal beam 1004 and a reference beam 1005. Signal beam 1004 spatially modulated by a spatial modulator (not shown) passes through a not-shown signal beam optical system to be collected onto hologram recording material 1006. On the other hand, reference beam 1005 passes through a not-shown reference beam optical system and reflected by a scan mirror 1001, to be incident on lens 1002 of the reference beam optical system at a desired angle.

With reference beam 1005, hologram recording material 1006 is irradiated via lens 1003. As shown in Fig. 14, interference fringes generated by the interference between signal beam 1004 and reference beam 1005, i.e., hologram 1007, is recorded on hologram recording material 1006. Here, varying the angle of scan mirror 1001, the incident angle of reference beam 1005 to hologram recording material 1006 changes in accordance with the angle variation. For respective incident angles, different holograms 1007 are multiplex-recorded in the identical recording area of hologram recording material 1006.

As above, in hologram recording and reconstructing apparatus 1000 shown in Fig. 14, scan mirror 1001 is used for deflecting reference beam 1005. Japanese Patent Laying-Open No. 2006-078942 proposes a scheme of using a diffractive optical element instead of scan mirror 1001.

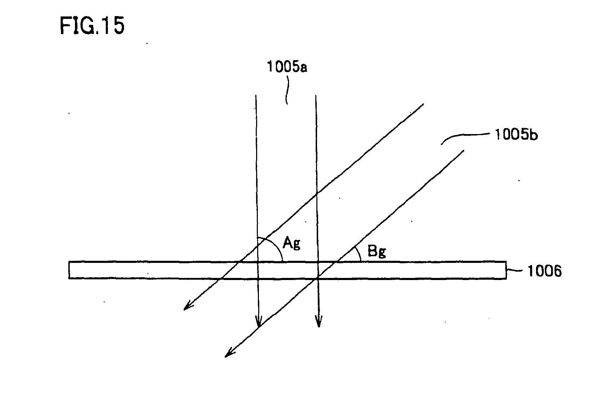

Fig. 15 shows changes in the area on hologram recording material 1006 irradiated with reference beam 1005, due to changes in the incident angle, in hologram recording and reconstructing apparatus 1000 shown in Fig. 14.

As shown in Fig. 15, reference beam 1005a and reference beam 1005b have constant beam width and have different incident angles Ag, Bg to hologram recording material 1006. In this case, as can be seen from Fig. 15, reference beam 1005b provides greater irradiation area on hologram recording material 1006 than reference beam 1005a does.

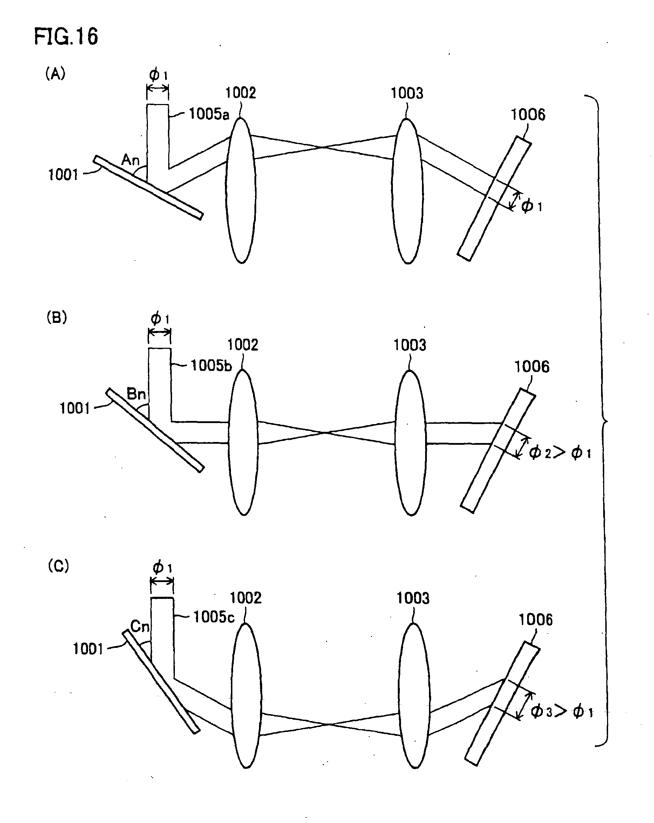

Fig. 16 shows changes in the irradiation area on hologram recording material 1006 against changes in the incident angle of reference beam 1005 in hologram recording and reconstructing apparatus 1000 in Fig. 14.

In Fig. 16, each reference beam 1005a-1005c has a constant beam diameter $\phi1$. In this case, as shown in (A), (B), (C) in Fig. 16, as respective incident angles An-Cn of reference beams 1005a-1005c become smaller in accordance with changes in the angle of scan mirror 1001, respective irradiation diameters $\phi1$-$\phi3$ of reference beams 1005a-1005c on hologram recording material 1006 become greater ($\phi1 < \phi2 < \phi3$).

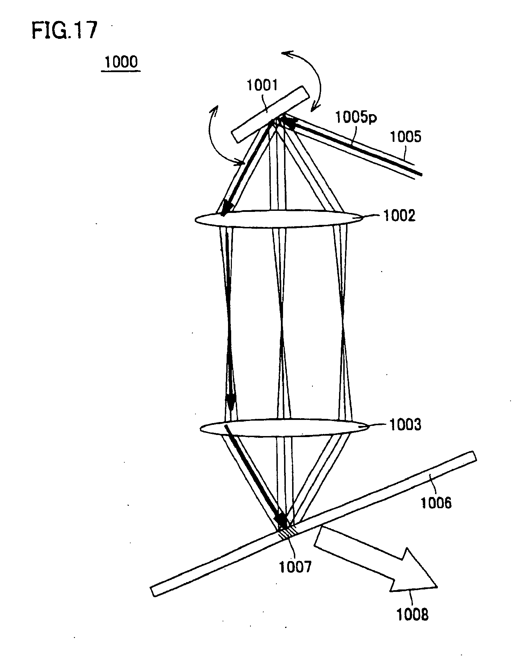

Fig. 17 shows a manner of reconstructing hologram 1007 recorded on hologram recording material 1006, in hologram recording and reconstructing apparatus 1000 shown in Fig. 14.

Referring to Fig. 17, in a reconstructing mode, hologram recording material 1006 is irradiated with only reference beam 1005. In Fig. 17, for the sake of clarity, an optical path of reference beam 1005p incident on hologram recording material 1006 at a certain incident angle is represented by the bold arrow. As in a recording mode, reference beam 1005 is deflected at a desired angle by scan mirror 1001, passes through lenses 1002, 1003 and enters hologram recording material 1006. Here, reconstructed beam 1008 is generated from hologram 1007 recorded on hologram recording material 1006. Reconstructed beam 1008 is photoelectrically converted by a not-shown image sensor, thereafter undergoes image processing and is reconstructed as data.

In conventional hologram recording and reconstructing apparatus 1000, when the incident angle of reference beam 1005 to hologram recording material 1006 changes as shown in Figs. 15 and 16, the identical area of hologram recording material 1006 is irradiated with signal beam 1004 at a constant incident angle, irrespective of the changes in the incident angle of reference beam 1005. It means that, as the area irradiated with reference beam 1005 increases, the range of hologram recording material 1006 irradiated with reference beam 1005, including the range irradiated with signal beam 1004, spreads.

However, in hologram recording and reconstructing apparatus 1000, it is desirable that hologram recording material 1006 is irradiated with reference beam 1005 in a range that overlaps by a required minimum degree with the irradiation range by signal beam 1004. If a portion is unnecessarily irradiated with reference beam 1005, hologram recording material 1006 is redundantly exposed correspondingly. The redundant exposure of hologram recording material 1006 consumes the dynamic range, and ultimately reduces the recording capacity of hologram recording material 1006.

As in conventional hologram recording and reconstructing apparatus 1000, when the incident angle of reference beam 1005 is to be changed by a telecentric optical system (for example, 4f optical system) configured by two lenses 1002, 1003, precise alignment of two lenses 1002, 1003 is required. Additionally, when the telecentric optical system is incorporated, the total length of the optical system becomes long and, as a result, hologram recording and reconstructing apparatus 1000 is increased in size.

SUMMARY OF THE INVENTION

An object of the present invention is to provide a deflection optical unit that is capable of suppressing an irradiation area on a target with a reference beam while keeping the compact size of an optical system, a hologram element used for the deflection optical unit, hologram element fabricating apparatus and method for fabricating the hologram element, and an information recording apparatus and information reconstructing apparatus using the deflection optical unit.

According to one aspect of the present invention, a hologram element for deflecting an optical beam being incident thereon is provided. The hologram element includes: a first hologram receiving a first optical beam that passes through a first base point and passes through a first region defined by a beam diameter of an incident beam to be incident on the hologram element; and a second hologram receiving a second optical beam that passes through the first base point and passes through a second region defined by a beam diameter of an incident beam to be incident on the hologram element, wherein a first diffracted beam diffracted by the first hologram passes through a second base point and passes through a third region defined by a beam diameter of the first diffracted beam, and a second diffracted beam diffracted by the second hologram passes through the second base point and passes through a fourth region defined by a beam diameter of the second diffracted beam.

Preferably, the first and second optical beams and the first and second diffracted beams are each a collimated beam.

Preferably, the first and second holograms are multiplex-recorded on the hologram element.

Preferably, the first and second holograms respectively emit the first and second diffracted beams at a constant diffraction efficiency irrespective of incident angles of the first and second optical beams to the hologram element.

Preferably, the beam diameters of the first and second diffracted beams are different depending on emission positions from the first and second holograms.

According to another aspect of the present invention, a hologram element fabricating apparatus for fabricating a hologram element is provided. The hologram element fabricating apparatus includes: a light source emitting a light beam; a beam splitter splitting the light beam into a fabrication signal beam and a fabrication reference beam; a first angle rotation mirror angularly rotating around a signal beam reference point, thereby reflecting the fabrication signal beam to each region of the hologram element; a second angle rotation mirror angularly rotating around a reference beam reference point, thereby reflecting the fabrication reference beam to a portion of the hologram element irradiated with the fabrication signal beam; a mirror reflecting the fabrication signal beam to the signal beam reference point, after the fabrication signal beam is transmitted through the hologram element; and a polarization adjusting portion matching polarization between the fabrication signal beam and the fabrication reference beam.

Preferably, the hologram element fabricating apparatus further includes an aperture changing a beam diameter of the fabrication signal beam and a beam diameter of the fabrication reference beam.

Preferably, the hologram element includes a first hologram receiving a first optical beam that passes through a first base point and passes through a first region defined by a beam diameter of an incident beam to be incident on the hologram element, and a second hologram receiving a second optical beam that passes through the first base point and passes through a second region defined by a beam diameter of an incident beam to be incident on the hologram element, wherein a first diffracted beam diffracted by the first hologram passes through a second base point and passes through a third region defined by a beam diameter of the first diffracted beam, wherein a second diffracted beam diffracted by the second hologram passes through the second base point and passes through a fourth region defined by a beam diameter of the second diffracted beam, wherein the reference beam reference point corresponds to the first base point, and wherein the signal beam reference point corresponds to the second base point.

According to still another aspect of the present invention, a hologram element fabricating method for fabricating a hologram element is provided. The hologram element fabricating method includes the steps of: emitting a light beam; splitting the light beam into a fabrication signal beam and a fabrication reference beam; angularly rotating around a signal beam reference point, thereby reflecting the fabrication signal beam to each region of the hologram element; angularly rotating around a reference beam reference point, thereby reflecting the fabrication reference beam to a portion of the hologram element irradiated with the fabrication signal beam; reflecting the fabrication signal beam to the signal beam reference point, after the fabrication signal beam is transmitted through the hologram element; matching polarization between the fabrication signal beam and the fabrication reference beam, and causing the fabrication signal beam and the fabrication reference beam to interfere with each other at a prescribed position in the hologram element, thereby multiplex-recording.

Preferably, the hologram element fabricating method further includes a step of changing a beam diameter of the fabrication signal beam and a beam diameter of the fabrication reference beam.

Preferably, the hologram element includes a first hologram receiving a first optical beam that passes through a first base point and passes through a first region defined by a beam diameter of an incident beam to be incident on the hologram element, and a second hologram receiving a second optical beam that passes through the first base point and passes through a second region defined by a beam diameter of an incident beam to be incident on the hologram element, wherein a first diffracted beam diffracted by the first hologram passes through a second base point and passes through a third region defined by a beam diameter of the first diffracted beam, wherein a second diffracted beam diffracted by the second hologram passes through the second base point and passes through a fourth region defined by a beam diameter of the second diffracted beam, wherein the reference beam reference point corresponds to the first base point, and wherein the signal beam reference point corresponds to the second base point.

According to a still another aspect of the present invention, a deflection optical unit deflecting a light beam is provided. The deflection optical unit includes: a hologram element irradiating a prescribed position with an incident beam as a reconstructed beam irrespective of an incident position of the incident beam; and an angle rotation mirror angularly rotating thereby reflecting the light beam to each region of the hologram element.

Preferably, an irradiation area of the prescribed position with the reconstructed beam is constant irrespective of an emission angle from the hologram element,

Preferably, the hologram element is a hologram element for deflecting an optical beam being incident thereon, and includes: a first hologram receiving a first optical beam that passes through a first base point and passes through a first region defined by a beam diameter of an incident beam to be incident on the hologram element; and a second hologram receiving a second optical beam that passes through the first base point and passes through a second region defined by a beam diameter of an incident beam to be incident on the hologram element, wherein a first diffracted beam diffracted by the first hologram passes through a second base point and passes through a third region defined by a beam diameter of the first diffracted beam, and a second diffracted beam diffracted by the second hologram passes through the second base point and passes through a fourth region defined by a beam diameter of the second diffracted beam.

According to a still another aspect of the present invention, an information recording apparatus recording on a hologram recording medium interference fringes of a signal beam and a record reference beam by an angular multiplex-recording scheme, comprising: a light source emitting an optical beam; a beam splitter splitting the optical beam into a signal beam and a reference beam; a spatial light modulator providing information to the signal beam; an objective lens collecting the signal beam on the hologram recording medium; and a deflection optical unit deflecting the reference beam corresponding to recording angles of angular multiplex-recording and collecting the reference beam on the hologram recording medium, wherein the deflection optical unit includes a hologram element irradiating a prescribed position in the hologram recording medium with an incident beam as the record reference beam irrespective of an incident position of the incident beam; and an angle rotation mirror angularly rotating thereby reflecting the optical beam to each region of the hologram element.

Preferably, an irradiation area of the prescribed position with the reconstructed beam is constant irrespective of an emission angle from the hologram element.

According to a still another aspect of the present invention, an information reconstructing apparatus reconstructing information by a reconstruction reference beam from a hologram recording medium on which interference fringes of a signal beam and a record reference beam have been recorded by an angular multiplex-recording scheme is provided. The information reconstructing apparatus includes a deflection optical unit deflecting the reference beam corresponding to recording angles of angular multiplex-recording and collecting the reference beam on the hologram recording medium, wherein the deflection optical unit includes a hologram element irradiating a prescribed position in the hologram recording medium with an incident beam as the reconstruction reference beam irrespective of an incident position of the incident beam; and an angle rotation mirror rotating an angle thereby reflecting the light beam to each region of the hologram element.

Preferably, an irradiation area of the prescribed position with the reconstructed beam is constant irrespective of an emission angle from the hologram element.

According to the present invention, an irradiation area on a target with a reference beam can be suppressed while keeping the compact size of an optical system.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 shows a configuration of a deflection optical system 1 including a deflection optical unit 100 according to a first embodiment of the present invention.

Fig. 2 is a schematic diagram showing an example of the operation principle of a hologram element 102 according to a second embodiment of the present invention.

Fig. 3 is a schematic diagram showing an example of the operation principle of hologram element 102 according to the second embodiment of the present invention.

Fig. 4 is a schematic diagram showing another example of the operation principle of hologram element 102 according to the second embodiment of the present invention.

Fig. 5 is a schematic diagram showing another example of the operation principle of hologram element 102 according to the second embodiment of the present invention.

Fig. 6 is a schematic diagram showing still another example of the operation principle of hologram element 102 according to the second embodiment of the present invention.

Fig. 7 is a schematic diagram showing a fabricating method of hologram element 102 according to a third embodiment of the present invention.

Fig. 8 shows a configuration of a hologram element fabricating apparatus 2 according to the third embodiment of the present invention.

Fig. 9 shows a manner of reconstructed beams 401, 402 emitted from hologram element 102 to a target 403.

Fig. 10 three-dimensionally shows a manner of hologram element 102 irradiated with fabrication reference beam 202 and the like.

Fig. 11 shows an exemplary configuration of a deflection optical unit 100a to hologram element 102 such as shown in Fig. 10.

Fig. 12 shows an operation in a recording mode of a hologram recording and reconstructing apparatus 10 according to a fourth embodiment of the present invention.

Fig. 13 shows an operation in a reconstructing mode of hologram recording and reconstructing apparatus 10 according to the fourth embodiment of the present invention.

Fig. 14 is a schematic configuration diagram partially showing a configuration of conventional hologram recording and reconstructing apparatus 1000.

Fig. 15 shows changes in the area on hologram recording material 1006 irradiated with reference beam 1005, due to changes in the incident angle, in hologram recording and reconstructing apparatus 1000 shown in Fig. 14.

Fig. 16 shows changes in the irradiation area on hologram recording material 1006 against changes in the incident angle of reference beam 1005, in hologram recording and reconstructing apparatus 1000 in Fig. 14.

Fig. 17 shows a manner of reconstructing hologram 1007 recorded on hologram recording material 1006, in hologram recording and reconstructing apparatus 1000 shown in Fig. 14.

DESCRIPTION OF THE PREFERRED EMBODIMENTS

In the following, embodiments of the present invention are described in detail referring to the drawings. Throughout the drawings, the same or corresponding parts are denoted by the same reference characters, and description thereof is not repeated.

First Embodiment

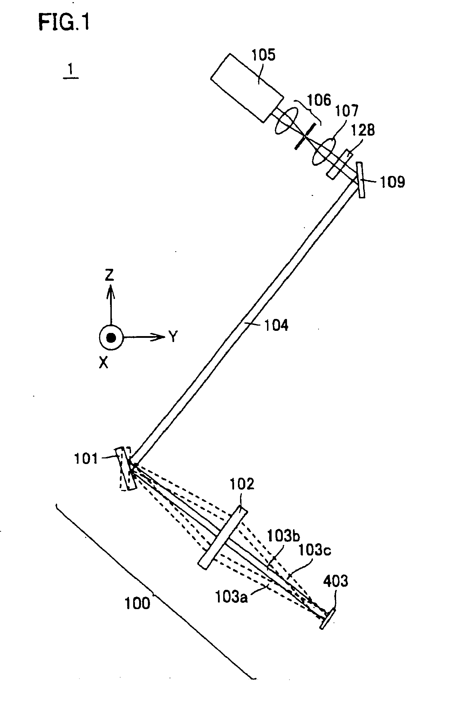

Fig. 1 shows a configuration of a deflection optical system 1 including a deflection optical unit 100 according to a first embodiment of the present invention.

Referring to Fig. 1, deflection optical system 1 of the first embodiment includes a deflection optical unit 100, a laser light source 105, a spatial filter 106, a collimate lens 107, an ND (Neutral Density) filter 128, and a mirror 109. Deflection optical unit 100 includes an angle rotation mirror 101 and a hologram element 102, and irradiates a target (e.g., recording medium) 403 with reconstructed beam 103a-103c.

Optical beam 104 emitted from laser light source 105 is converted by spatial filter 106 to have a desired beam diameter, and converted by collimate lens 107 into a collimated beam. Optical beam 104 rendered to be a collimated beam has its intensity adjusted by ND filter 128. The adjustment of the intensity may be carried out by the combination of a wave plate and a polarization element. Optical beam 104 having its intensity adjusted is lead by mirror 109 to angle rotation mirror 101.

Angle rotation mirror 101 reflects optical beam 104 toward hologram element 102. An example of angle rotation mirror 101 may be a galvano mirror. Holograms are recorded on hologram element 102 in advance, so that reconstructed beams 103a-103c are collected at a prescribed position irrespective of an incident position of optical beam 104.

As above, according to the first embodiment, by using deflection optical unit 100, it becomes possible to structure deflection optical system 1 that irradiates a specific region with an optical beam at stepwise-varied angles, solely by the rotation operation of angle rotation mirror 101.

Conventionally, in order to irradiate a specific region with an optical beam while varying the deflection angle, it has been necessary to structure an optical system in which two telecentric lenses are used. In deflection optical unit 100 of the first embodiment, use of hologram element 102 provides the simplified optical system and easier adjustment of the optical system.

Second Embodiment

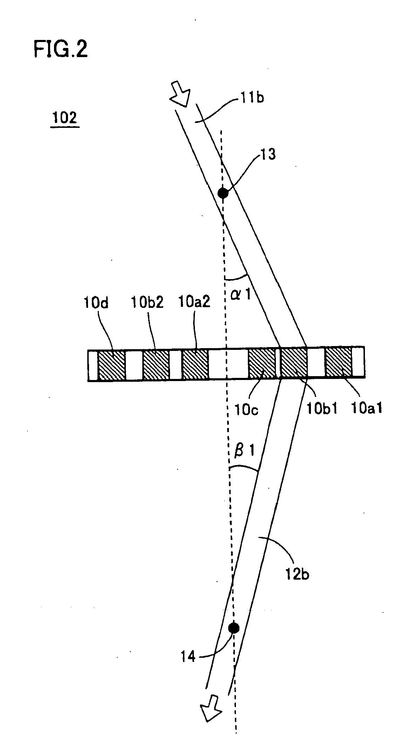

Fig. 2 is a schematic diagram showing an example of the operation principle of a hologram element 102 according to a second embodiment of the present invention.

Referring to Fig. 2, as a material of hologram element 102, a material that is capable of recording interference fringes of light (hologram), specifically a photosensitive polymer material or the like, may be used. On hologram element 102, holograms 10a1, 10a2, 10b1, 10b2, 10c, 10d are multiplex-recorded by the interference of optical beams. Here, as one example, an operation when hologram 10b1 is irradiated with optical beams is described.

Optical beam 11 b passes through a base point 13 to be incident on hologram 10b1 at angle $\alpha$. On the other hand, optical beam 12b exits from hologram 10b1 at angle $\beta$ toward a base point 14. In association with deflection optical unit 100 of the first embodiment, the rotation center of angle rotation mirror 101 is positioned at base point 13, and target 403 is positioned at base point 14.

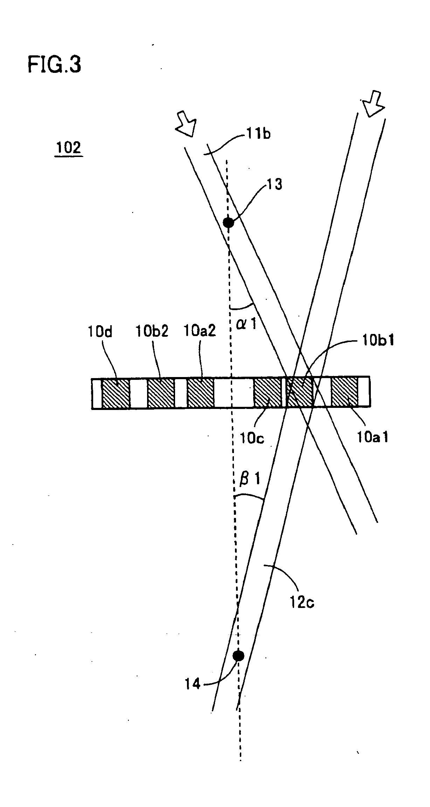

Fig. 3 is a schematic diagram showing an example of the operation principle of hologram element 102 according to the second embodiment of the present invention.

Referring to Fig. 3, when fabricating hologram 10b1 in hologram element 102, hologram element 102 is irradiated with optical beam 11b and optical beam 12c. Optical beams 11b, 12c are each an incident optical beam of a collimated beam that does not converge and diverge. Optical beam 11b is emitted so as to pass through base point 13. Optical beam 12c is emitted so as to pass through base point 14. Base points 13, 14 respectively reside in regions determined by the beam diameters of optical beams 11 b, 12c. Here, in hologram element 102, interference fringes are formed as diffraction grating (hologram) by the interference between optical beams 11b and 12c.

In Fig. 3, it is assumed that hologram 10b1 in hologram element 102 is irradiated with optical beam 11 b, which has the same wavelength, incident angle $\alpha 1$ and wavefront as that used when hologram 10b1 was produced, i.e., irradiated with optical beam 11b satisfying Bragg condition. In this case, as shown in Fig. 2, reconstructed beam 12b is generated from hologram element 102, which takes the same path as optical beam 12c used when hologram 10b1 was produced. On the other hand, when optical beam 11b having different conditions as to wavelength, incident angle, wavefront, phase and the like from that used when hologram 10b1 was produced, Bragg condition is not satisfied and reconstructed beam 12b is not generated.

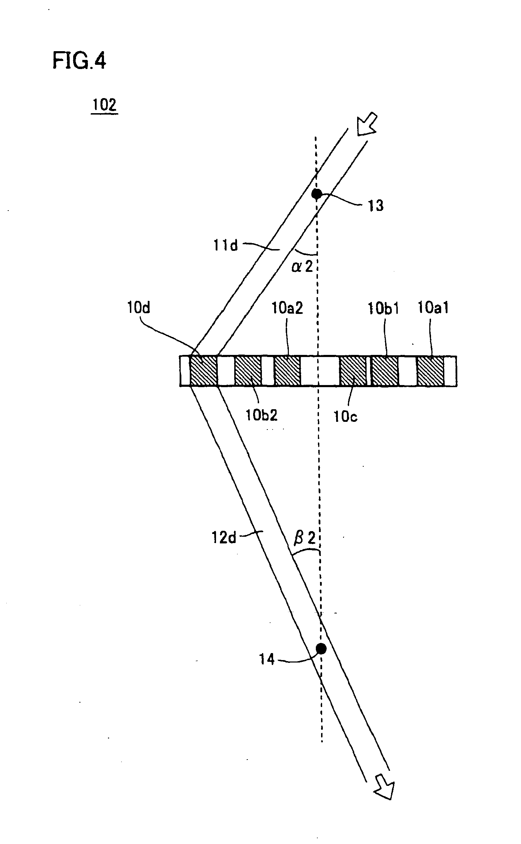

Fig. 4 is a schematic diagram showing another example of the operation principle of hologram element 102 according to the second embodiment of the present invention.

Referring to Fig. 4, optical beam 11d passes through base point 13 to be incident on hologram 10d at angle $\alpha 2$. On the other hand, optical beam 12d exits from hologram 10d at angle $\beta 2$ toward base point 14. Optical beams 11d, 12d are each an incident optical beam of collimated beam that does not converge and diverge.

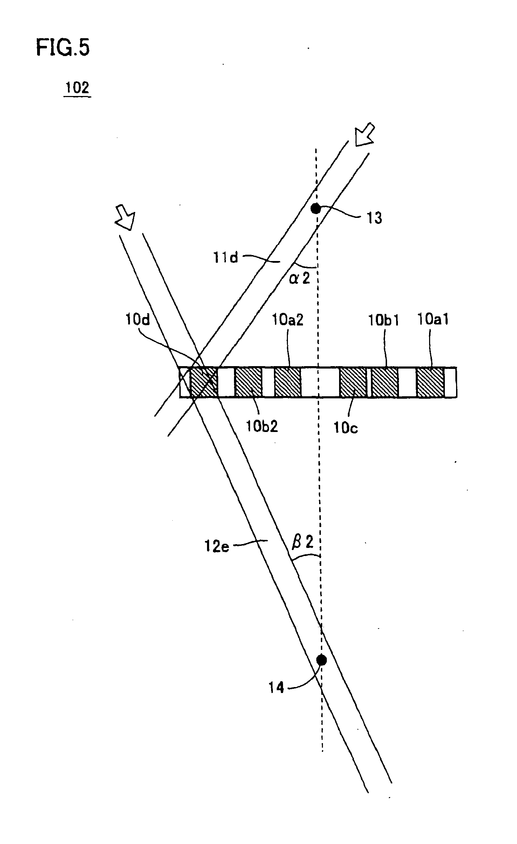

Fig. 5 is a schematic diagram showing another example of the operation principle of hologram element 102 according to the second embodiment of the present invention.

Referring to Fig. 5, when fabricating hologram 10d in hologram element 102, hologram element 102 is irradiated with optical beam 11d and optical beam 12e. Optical beam 11d is emitted so as to pass through base point 13. Optical beam 12e is emitted so as to pass through base point 14.

In Fig. 5, it is assumed that hologram 10d in hologram element 102 is irradiated with optical beam 11d, which has the same wavelength, incident angle $\alpha 2$ and wavefront as that used when hologram 10d was produced, i.e., irradiated with optical beam 11d satisfying Bragg condition. In this case, as shown in Fig. 4, reconstructed beam 12d is generated from hologram element 102, which takes the same path as optical beam 12e used when hologram 10d was produced.

As above, hologram element 102 is irradiated with optical beams 11b, 11d, ... passing through base point 13, and holograms are multiplex-recorded. The diameters of optical beams 12b, 12d, ... being diffracted beams passing through base point 14 are different by the emission position from holograms 10b1, 10d, ...

Irrespective of the incident angles of optical beams 11b, 11d, ... to hologram element 102, holograms 10b1, 10d, ... emit optical beams 12b, 12d being diffracted beams at a constant diffraction efficiency. It is to be noted that, while holograms 10a1, 10a2, 10b1, ... are shown with a distance from each other in Figs. 2-5, part of holograms 10a1, 10a2, 10b1 ... may be recorded as partially overlapping with each other, that is, may be multiplex-recorded.

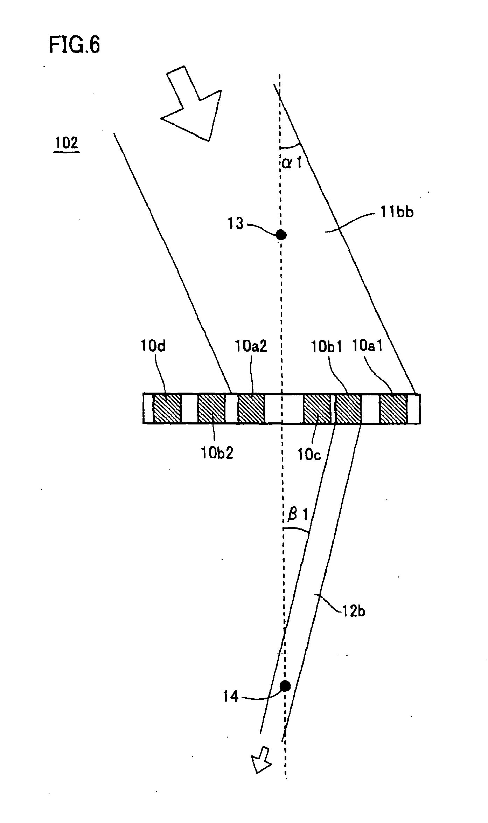

Fig. 6 is a schematic diagram showing still another example of the operation principle of hologram element 102 according to the second embodiment of the present invention.

Referring to Fig. 6, hologram element 102 is irradiated with optical beam 11bb at incident angle $\alpha 1$, wherein optical beam 11bb has the same wavelength and phase as that used when hologram 10b1 was produced, passes through base point 13, and has the beam diameter greater than that of optical beams 11b, 12c used when hologram 10b1 was produced. In such a case, reconstructed beam 12b is generated by components of optical beam 11bb that satisfy Bragg condition of hologram 10b1.

As shown in Fig. 6, even if holograms 10a1, ..., 10c, 10d, are irradiated with optical beam 10bb, since the incident angle of optical beam 10bb is different from that when holograms 10a1, 10a2, 10b2, 10c, 10d were produced, a reconstructed beam is not generated from holograms 10a1, 10a2, 10b2, 10c, 10d. Accordingly, for generating an optical beam that has the same wavelength as that when hologram element 102 was produced, and that passes through base point 14 at a desired angle, it is only necessary to adjust the incident angle of optical beam 10bb to hologram element 102.

As above, according to the second embodiment, by positioning base points 13, 14 in association with deflection optical unit 100 of the first embodiment, a desired hologram element 102 can be produced using the configuration of deflection optical unit 100. Thus, only when hologram element 102 is irradiated with the optical beam satisfying Bragg condition, the reconstructed beam that takes the same path as the optical beam used when the hologram was produced is generated from hologram element 102.

Third Embodiment

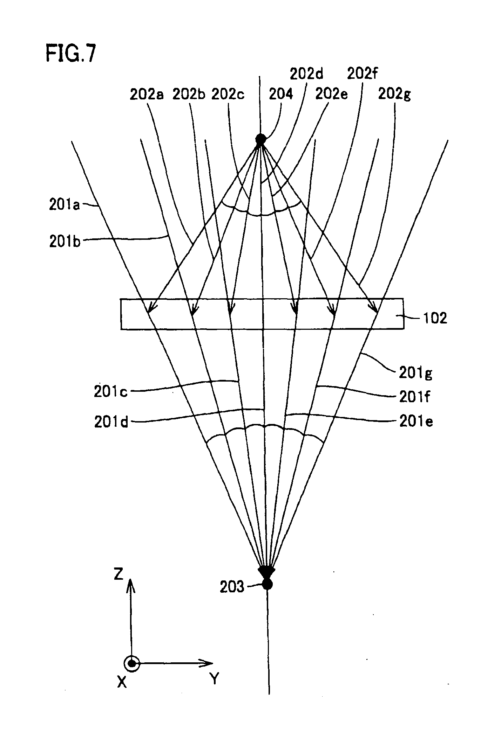

Fig. 7 is a schematic diagram showing a fabricating method of hologram element 102 according to a third embodiment of the present invention.

In Fig. 7, for the sake of clarity, the propagation directions of optical beams are represented by arrows. An optical beam emitted from a not-shown light source is split by a polarization beam splitter (PBS) or the like The resulting one is referred to as signal beam 201 for fabricating hologram element 102 (hereinafter also referred to as fabrication signal beam 201), and the other is referred to as reference beam 202 for fabricating hologram element 102 (hereinafter also referred to as fabrication reference beam 202). Fabrication signal beam 201 and fabrication reference beam 202 are set such that their polarization and intensity are identical. Fabrication signal beam 201 includes fabrication signal beams 201a-201g. Fabrication reference beam 202 includes fabrication reference beams 202a-202g.

Fabrication signal beam 201a is emitted to hologram element 102 so as to pass through signal beam reference point 203 on the emission side of hologram element 102. Fabrication reference beam 202a passes through reference beam reference point 204 on the input side of hologram element 102 and emitted onto hologram element 102. The interference fringes of fabrication reference beam 202a and fabrication signal beam 201a is recorded on hologram element 102.

Similarly, interference fringes of fabrication signal beam 201b and fabrication reference beam 202b, interference fringes of fabrication signal beam 201c and fabrication reference beam 202c, ..., are multiplex-recorded on hologram element 102. It is to be noted that, as described above, fabrication signal beams 201a-201g are always emitted toward signal beam reference point 203, and fabrication reference beams 202a-202g are always emitted to hologram element 102 so as to be transmitted through reference beam reference point 204.

Here, reference beam reference point 204 and signal beam reference point 203 respectively correspond to base points 13 and 14 shown in Figs. 2-6 of the second embodiment. That is, reference beam reference point 204 and signal beam reference point 203 reside within the regions determined by respective optical beam diameters of reference beam 202 and signal beam 201.

The angle formed between fabrication signal beam 201a and fabrication signal beam 201b, the angle formed between fabrication signal beam 201b and fabrication signal beam 201c, ..., are all set to an equal angle. Similarly, the angle formed between fabrication reference beam 202a and fabrication reference beam 202b, the angle formed between fabrication reference beam 202b and fabrication reference beam 202c, ..., are all set to an equal angle. It is to be noted that the distance between hologram element 102 and signal beam reference point 203 and the distance between hologram element 102 and reference beam reference point 204 may be the same or different.

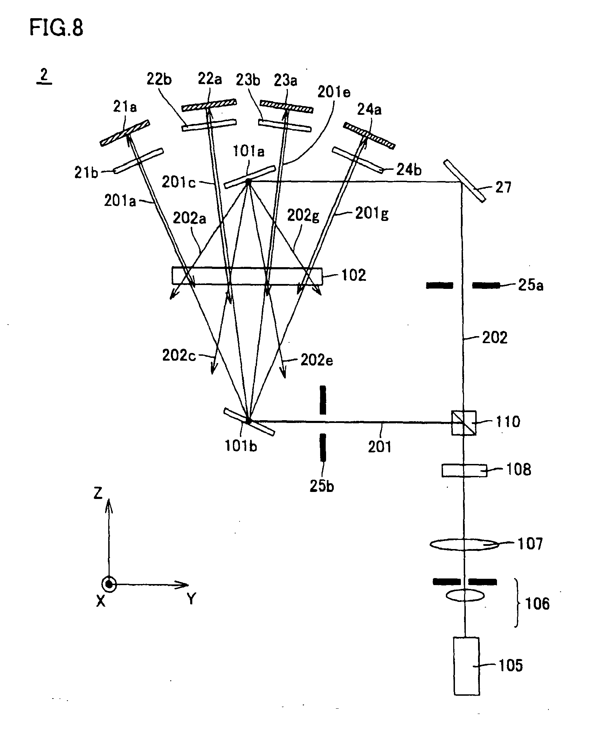

Fig. 8 shows a configuration of a hologram element fabricating apparatus 2 according to the third embodiment of the present invention.

Referring to Fig. 8, hologram element fabricating apparatus 2 of the third embodiment includes mirrors 21a-24a, 27, quarter-wave plates 2 1 b-24b, apertures 25a, 25b, angle rotation mirrors 101a, 101b, a laser light source 105, a spatial filter 106, a collimate lens 107, a half-wave plate 108, and a polarization beam splitter 110. Mirrors 21a-24a and quarter wave plates 21b-24b may be integrally formed.

Apertures 25a, 25b are provided for adjusting the diameter of an optical beam when fabricating hologram element 102. In Fig. 8, for the sake of clarity, chief rays of optical beams are represented by arrows.

The light beam emitted from laser light source 105 is converted by spatial filter 106 to have a desired beam diameter, and converted by collimate lens 107 into a collimated beam. The light beam rendered to be a collimated beam passes through half-wave plate 108, and is split into signal beam 201 for fabricating hologram element 102 and reference beam 202 for fabricating hologram element 102. The split ratio between fabrication signal beam 201 and fabrication reference beam 202 is adjusted by rotation of half-wave plate 108.

Fabrication signal beam 201 passes through aperture 25b and is lead to angle rotation mirror 101b. The rotation center of angle rotation mirror 101b is provided at signal beam reference point 203 described referring to Fig. 7. Fabrication reference beam 202 passes through aperture 25a, is reflected by mirror 27, and is lead to angle rotation mirror 101a. The rotation center of angle rotation mirror 101a is provided at reference beam reference point 204 described referring to Fig. 7.

Fabrication reference beam 202 is reflected by angle rotation mirror 101a, and fabrication reference beams 202a, 202c, 202e, 202g are successively generated so as to be incident on hologram element 102 at desired angles. Fabrication signal beam 201 is reflected by angle rotation mirror 101b, and fabrication signal beams 201a, 201c, 201e, 201g to be incident on hologram element 102 are generated, in the direction along which they are transmitted through the regions of hologram element 102 which are irradiated with fabrication reference beams 202a, 202c, 202e, 202g.

Here, the same region on hologram element 102 is irradiated with fabrication reference beam 202 and fabrication signal beam 201. However, at this stage, fabrication reference beam 202 and fabrication signal beam 201 are different in the polarization direction and, therefore, interference between them is not induced and no effect is provided to hologram element 102.

Fabrication signal beams 201a, 201 c, 201e, 201 g are once transmitted through hologram element 102, and thereafter successively converted by quarter wave plates 21b-24b into circular polarization. Fabrication signal beams 201 a, 201 c, 201e, 201 g converted into circular polarization are respectively reflected toward angle rotation mirror 101b by mirrors 2 1 a-24a, and again passes through quarter wave plates 21b-24b and successively converted into linear polarization.

Here, again, the same region on hologram element 102 is irradiated with fabrication reference beam 202 and fabrication signal beam 201. At this stage, fabrication reference beam 202 and fabrication signal beam 201 are the same in the polarization direction and, therefore, interference between them is induced in hologram element 102 and interference fringes are multiplex-recorded as holograms in hologram element 102. By the foregoing operation, hologram element 102 is produced.

When hologram element 102 is produced by hologram element fabricating apparatus 2 in Fig. 8, by changing the beam diameter of fabrication signal beam 201 and that of fabrication reference beam 202 by apertures 25a, 25b, respectively, the irradiation area on target 403 by reconstructed beams 103a-103c shown in Fig. 1 can be maintained always to be constant, as will be described below.

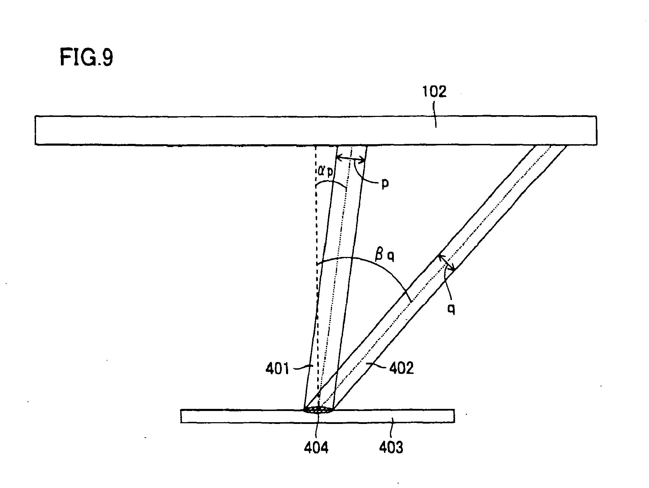

Fig. 9 shows a manner of reconstructed beams 401, 402 emitted from hologram element 102 to target 403.

As shown in Fig. 9, reconstructed beam 401 of beam diameter p is emitted from hologram element 102 to target 403 at incident angle $\alpha p$. Also, reconstructed beam 402 of beam diameter q is emitted from hologram element 102 to target 403 at incident angle $\beta q$. By allowing beam diameter p and incident angle $\alpha p$, and beam diameter q and incident angle $\beta q$, to satisfy the following relationship (1) when fabricating hologram element 102, irradiation area 404 on target 403 can be maintained to be constant even when the incident angles of reconstructed beams 401, 402 change.

$$p/\cos\alpha p = q/\cos\beta q \qquad (1)$$

Referring to Fig. 7, when fabricating hologram element 102, fabrication signal beam 201 and fabrication reference beam 202 being parallel to Y-Z plane of Fig. 7 are caused to interfere with each other to perform multiplex-recording. However, the direction of fabrication signal beam 201 and fabrication reference beam 202 is not limited to Y-Z plane.

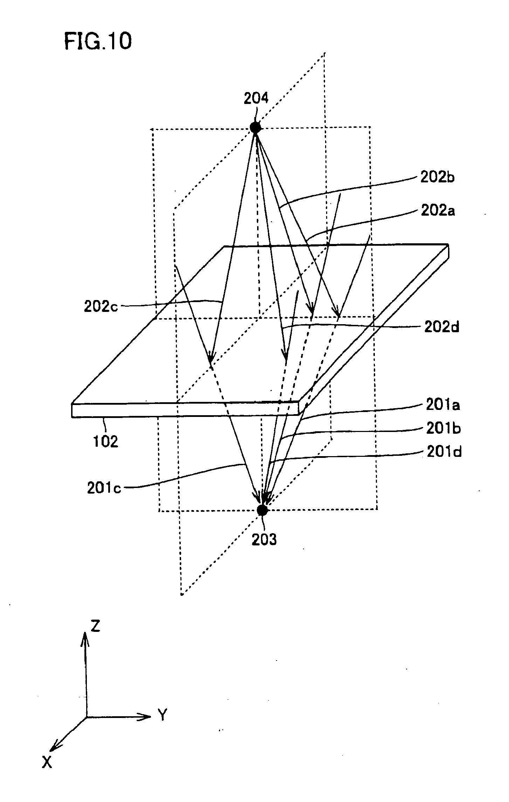

Fig. 10 three-dimensionally shows a manner of hologram element 102 irradiated with fabrication reference beam 202 and the like.

As shown in Fig. 10, multiplex-recording can be performed by causing interference of fabrication signal beams 201a-201d and fabrication reference beams 202a-204d parallel to X-Z plane, not being limited to Y-Z plane. In any case, fabrication signal beam 201 must pass through signal beam reference point 203 and fabrication reference beam 202 must pass through reference beam reference point 204.

It is to be noted that, if fabrication signal beam 201 passes through signal beam reference point 203 and fabrication reference beam 202 passes through reference beam reference point 204, interference fringes can be recorded on arbitrary portion of hologram element 102. In hologram element fabricating apparatus 2 in Fig. 8, fabrication signal beams 20 1 a, 201c, 201e, 201 g are once transmitted through hologram element 102, and thereafter have their polarization matched with that of fabrication reference beams 202a, 202c, 202e, 202g. Then, fabrication signal beams 201a, 201c, 201e, 201g are again emitted onto hologram element 102.

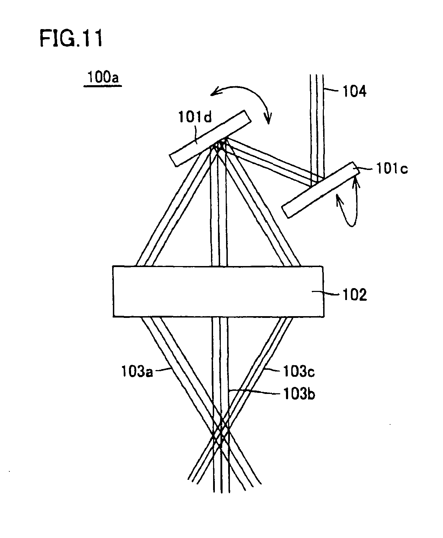

Fig. 11 shows an exemplary configuration of a deflection optical unit 100a to hologram element 102 such as shown in Fig. 10.

Referring to Fig. 11, deflection optical unit 100a includes two angle rotation mirrors 101c, 101d. Angle rotation mirror 101c has a rotation axis in parallel to the surface of the drawing. Angle rotation mirror 101d has a rotation axis perpendicular to the surface of the drawing. Optical beam 104 from the outside has its direction adjusted by angle rotation mirrors 101c, 101d and thereafter enters hologram element 102, and emit reconstructed beams 103a-103c.

As described above, according to the third embodiment, by fabricating hologram element 102 by hologram element fabricating apparatus 2 and irradiating the recording medium with the reference beam using hologram element 102 instead of a telecentric optical system, the irradiation area on the recording medium by the reference beam can be suppressed, while the optical system is kept compact.

Fourth Embodiment

In a fourth embodiment, description is given as to recording or reconstructing of information on or from a hologram recording medium by the angular multiplex recording scheme, in the hologram recording and reconstructing apparatus using deflection optical unit 100 described in the first embodiment.

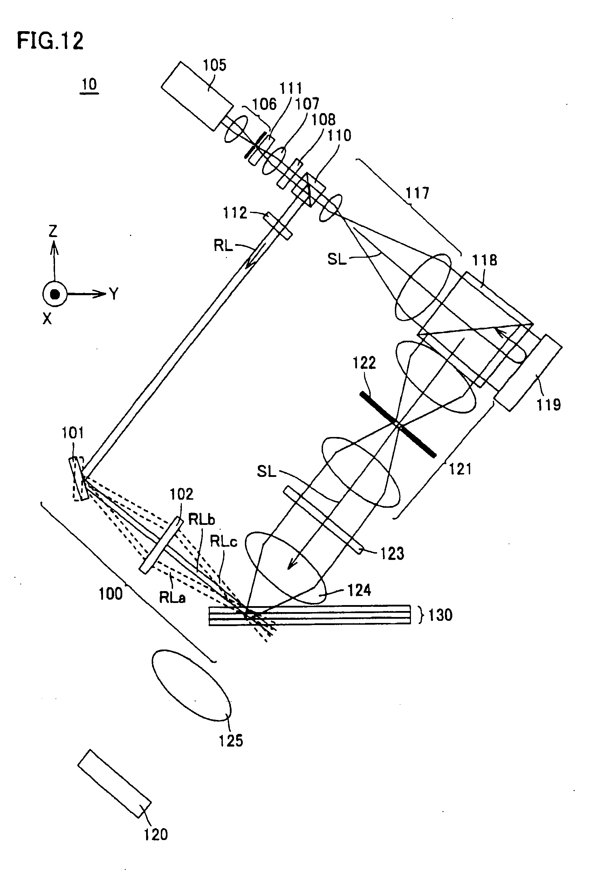

Fig. 12 shows an operation in a recording mode of a hologram recording and reconstructing apparatus 10 according to the fourth embodiment of the present invention. Hologram recording and reconstructing apparatus 10 may be a hologram recording apparatus dedicated to recording.

Referring to Fig. 12, hologram recording and reconstructing apparatus 10 of the fourth embodiment includes a deflection optical unit 100, a laser light source 105, a spatial filter 106, a collimate lens 107, half-wave plates 108, 112, 123, polarization beam splitters (PBS) 110, 118, a shutter 111, a beam expander 117, a spatial light modulator (SLM) 119, an imaging element 120, a relay lens 121, a polytopic aperture 122, an objective lens 124, and an imaging lens 125.

Deflection optical unit 100 includes an angle rotation mirror 101 and a hologram element 102, and irradiates hologram recording medium 130 with reference beams RLa-RLc for recording (hereinafter also referred to as record reference beams RLa-RLc). Hologram recording and reconstructing apparatus 10 causes signal beam SL and reference beam RL to interfere with each other in hologram recording medium 130 thereby recording the interference fringes. Hologram recording and reconstructing apparatus 10 changes the incident angle of reference beam RL and records holograms by the angular multiplex recording scheme.

A light beam emitted from laser light source 105 is converted by spatial filter 106 to have a desired beam diameter, and converted by collimate lens 107 to be a collimated beam. The light beam rendered to be a collimated beam passes through half-wave plate 108, and is split by polarization beam splitter 110 into signal beam SL and reference beam RL. The split ratio between signal beam SL and reference beam RL is adjusted by the rotation of half-wave plate 108.

After reference beam RL has its polarization rotated by half-wave plate 112, it is reflected by angle rotation mirror 101, to be incident on hologram element 102 at a desired angle. When reference beam RL is incident on hologram element 102, record reference beams RLa-RLc are generated from holograms in hologram element 102.

Here, varying the angle of angle rotation mirror 101, the incident angle of reference beam RL to hologram recording material 102 changes in accordance with the angle variation. For respective incident angles, different record reference beams RLa-RLc are generated.

On the other hand, as described in the third embodiment, hologram recording medium 130 is provided at the position (signal beam reference point 203) where it is always irradiated with record reference beams RLa-RLc. Accordingly, hologram recording medium 130 is irradiated with record reference beams RLa-RLc always at the prescribed positions. As a result, even when angle rotation mirror 101 is rotated, the incident positions of reference beams RLa-RLc to hologram recording medium 130 do not change.

Signal beam SL has its optical beam diameter adjusted by beam expander 117 so that the entire surface of spatial light modulator 119 is irradiated with the same. Signal beam SL is amplitude-modulated and/or phase-modulated by spatial light modulator 119. As spatial light modulator 119, for example, a reflective liquid crystal spatial light modulator, a DMD (Digital Mirror Device), a spatial light modulator using the magnetooptical effect or electrooptical effect can be used. Here, a description will be given as to amplitude change of signal beam SL using a reflective liquid crystal spatial light modulator as spatial light modulator 119.

Spatial light modulator 119 converts incident p-polarized signal beam SL into p-polarized or s-polarized beam pixel by pixel and emits the converted beam. Signal beam SL constituted by s-polarization component is reflected by polarization beam splitter 118 toward hologram recording medium 130. Reflected signal beam SL passes through relay lens 121 and half-wave plate 123, and collected in hologram recording medium 130 by objective lens 124. Collected signal beam SL overlaps with reference beam RL in hologram recording medium 130, and the light intensity distribution of resulting interference fringes is recorded as a hologram.

It is to be noted that an unnecessary diffracted beam generated at spatial light modulator 119 is blocked by polytopic aperture 122. Polytopic aperture 122 is a light blocking mask having an opening whose center corresponds to the optical axis of the optical beam of signal beam SL, and is arranged at the lens focal plane of relay lens 121 in Fig. 12. In a recording mode, on the lens focal plane of relay lens 121, a Fourier transformation image of a light amplitude pattern formed by spatial light modulator 119 is formed. The Fourier transformation image has a plurality of bright spots. The bright spot at the center of the optical axis is referred to as a Oth-order diffracted beam, around which diffracted beams of higher order such as 1 st, 2nd, 3rd, ...are formed in order.

Respective intensity distributions of the diffracted beams are identical in shape while the peak value is different. In the hologram recording, in order to increase recording density, normally only the 0th order diffracted beam is passed and recorded on hologram recording medium 130. Polytopic aperture 122 functions to remove surrounding diffracted beams of higher order. It is to be noted that polytopic aperture 122 is merely an example, and other aperture may be employed.

After information is recorded on hologram recording medium 130, a data page to be recorded next is displayed at spatial light modulator 119. In addition, angle rotation mirror 101 rotates slightly to change an incident angle of reference beam RL Thereafter, when shutter 111 opens, the data page to be recorded next is recorded in an angular-multiplexing manner on the same recording region of hologram recording medium 130. This operation is repeated. When a predetermined degree of multiplexing is reached, hologram recording medium 130 is shifted in the X or Y direction to make a record in a next recording region in the multiplexing manner as described above.

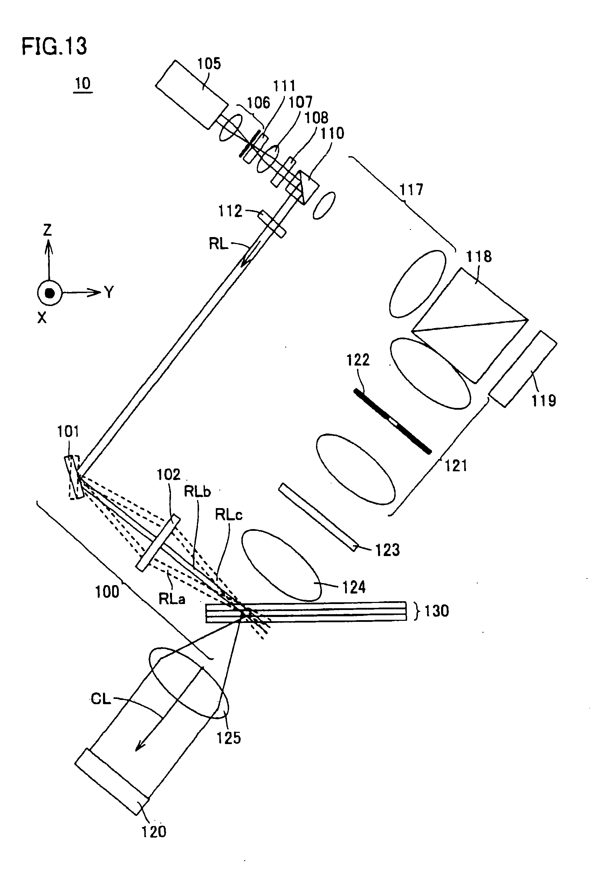

Fig. 13 shows an operation in a reconstructing mode of hologram recording and reconstructing apparatus 10 according to the fourth embodiment of the present invention. Hologram recording and reconstructing apparatus 10 may be a hologram reconstructing apparatus dedicated to reconstruction.

The configuration of hologram recording and reconstructing apparatus 10 shown in Fig. 13 is the same as that described with reference to Fig. 12. Accordingly, the description thereof is not repeated. As imaging element 120, for example, CMOS (Complementary Metal Oxide Semiconductor), CCD (Charge Coupled Device) and the like are employed. In a reconstructing mode, only reference beam RL is used.

As in the recording mode, reference beam RL is deflected at a desired angle by angle rotation mirror 101, and hologram element 102 is irradiated with the same. Reconstruction reference beams RLa-RLc are generated from hologram element 102, to be incident on hologram recording medium 130. By the irradiation of hologram recording medium 130 with reference beams RLa-RLc, reconstructed beam CL that takes the same optical path as signal beam SL having been recorded is generated. Reconstructed beam CL is detected by imaging lens 125 and imaging element 120, and photoelectrically converted. Thereafter, it undergoes image processing. Thus, the data having been recorded on hologram recording medium 130 is reconstructed.

It is to be noted that, in hologram recording and reconstructing apparatus 10 of the fourth embodiment, hologram element 102 of the third embodiment shown in Fig. 10 can be employed. Additionally, in hologram recording and reconstructing apparatus 10 of the fourth embodiment, it is possible to employ deflection optical unit 100a using two angle rotation mirrors 101c, 101d as shown in Fig. 11.

As described above, according to the fourth embodiment, by recording and reconstructing information using the hologram recording and reconstructing apparatus using the deflection optical unit of the first embodiment, the irradiation area on the recording medium by the reference beam can be suppressed, while the compact size of optical system is kept.

Although the present invention has been described and illustrated in detail, it is clearly understood that the same is by way of illustration and example only and is not to be taken by way of limitation, the scope of the present invention being interpreted by the terms of the appended claims.

**Claims**

1. A hologram element (102) for deflecting an optical beam being incident thereon, comprising:

   a first hologram (10al) receiving a first optical beam that passes through a first base point (13) and passes through a first region defined by a beam diameter of an incident beam to be incident on said hologram element; and
   a second hologram (10a2) receiving a second optical beam that passes through said first base point (13) and passes through a second region defined by a beam diameter of an incident beam to be incident on said hologram element, wherein
   a first diffracted beam diffracted by said first hologram (10al) passes through a second base point (14) and passes through a third region defined by a beam diameter of said first diffracted beam, and
   a second diffracted beam diffracted by said second hologram (10a2) passes through said second base point (14) and passes through a fourth region defined by a beam diameter of said second diffracted beam.

2. The hologram element according to claim 1, wherein
   said first and second optical beams and said first and second diffracted beams are each a collimated beam.

3. The hologram element according to claim 1, wherein
   said first and second holograms (10a1, 10a2) are multiplex-recorded on said hologram element (102).

4. The hologram element according to claim 1, wherein
   said first and second holograms (10a1, 10a2) respectively emit said first and second diffracted beams at a constant diffraction efficiency irrespective of incident angles of said first and second optical beams to said hologram element (102).

5. The hologram element according to one of claims 1-4, wherein
   said beam diameters of said first and second diffracted beams are different depending on emission positions from said first and second holograms (10a1, 10a2).

6. A hologram element fabricating apparatus (2) for fabricating a hologram element, comprising:

   a light source (105) emitting a light beam,
   a beam splitter (110) splitting said light beam into a fabrication signal beam and a fabrication reference beam;
   a first angle rotation mirror (101b) angularly rotating around a signal beam reference point, thereby reflecting said fabrication signal beam to each region of said hologram element;
   a second angle rotation mirror (101a) angularly rotating around a reference beam reference point, thereby reflecting said fabrication reference beam to a portion of said hologram element irradiated with said fabrication signal beam;
   a mirror (21a-24a) reflecting said fabrication signal beam to said signal beam reference point, after said fabrication signal beam is transmitted through said hologram element; and
   a polarization adjusting portion (21b-24b) matching polarization between said fabrication signal beam and said fabrication reference beam.

7. The hologram element fabricating apparatus according to claim 6, further comprising
   an aperture (25a, 25b) changing a beam diameter of said fabrication signal beam and a beam diameter of said fabrication reference beam.

8. The hologram element fabricating apparatus according to claim 6 or 7, wherein
   said hologram element (102) includes
   a first hologram (10a1) receiving a first optical beam that passes through a first base point (13) and passes through a first region defined by a beam diameter of an incident beam to be incident on said hologram element, and

a second hologram (10a2) receiving a second optical beam that passes through said first base point (13) and passes through a second region defined by a beam diameter of an incident beam to be incident on said hologram element, wherein

a first diffracted beam diffracted by said first hologram (10a1) passes through a second base point (14) and passes through a third region defined by a beam diameter of said first diffracted beam, wherein

a second diffracted beam diffracted by said second hologram (10a2) passes through said second base point (14) and passes through a fourth region defined by a beam diameter of said second diffracted beam, wherein

said reference beam reference point corresponds to said first base point (13), and wherein

said signal beam reference point corresponds to said second base point (14).

9.  A hologram element fabricating method (105) for fabricating a hologram element, comprising the steps of:

    emitting a light beam;
    splitting (110) said light beam into a fabrication signal beam and a fabrication reference beam;
    angularly rotating (101b) around a signal beam reference point, thereby reflecting said fabrication signal beam to each region of said hologram element;
    angularly rotating (101 a) around a reference beam reference point, thereby reflecting said fabrication reference beam to a portion of said hologram element irradiated with said fabrication signal beam;
    reflecting (21a-24a) said fabrication signal beam to said signal beam reference point, after said fabrication signal beam is transmitted through said hologram element;
    matching (21b-24b) polarization between said fabrication signal beam and said fabrication reference beam; and
    causing said fabrication signal beam and said fabrication reference beam to interfere with each other at a prescribed position in said hologram element, thereby multiplex-recording.

10. The hologram element fabricating method according to claim 9, further comprising a step of changing (25a, 25b) a beam diameter of said fabrication signal beam and a beam diameter of said fabrication reference beam.

11. The hologram element fabricating method according to claim 9 or 10, wherein
    said hologram element (102) includes
    a first hologram (10a1) receiving a first optical beam that passes through a first base point (13) and passes through a first region defined by a beam diameter of an incident beam to be incident on said hologram element, and
    a second hologram (10a2) receiving a second optical beam that passes through said first base point (13) and passes through a second region defined by a beam diameter of an incident beam to be incident on said hologram element, wherein
    a first diffracted beam diffracted by said first hologram (10a1) passes through a second base point (14) and passes through a third region defined by a beam diameter of said first diffracted beam, wherein
    a second diffracted beam diffracted by said second hologram (10a2) passes through said second base point (14) and passes through a fourth region defined by a beam diameter of said second diffracted beam, wherein
    said reference beam reference point corresponds to said first base point (13), and wherein
    said signal beam reference point corresponds to said second base point (14).

12. A deflection optical unit (100) deflecting a light beam, comprising:

    a hologram element (102) irradiating a prescribed position with an incident beam as a reconstructed beam irrespective of an incident position of said incident beam; and
    an angle rotation mirror (101) angularly rotating thereby reflecting the light beam to each region of said hologram element.

13. The deflection optical unit according to claim 12, wherein
    an irradiation area of said prescribed position with said reconstructed beam is constant irrespective of an emission angle from said hologram element (102).

14. The deflection optical unit according to claim 12 or 13, wherein
    said hologram element is a hologram element (102) for deflecting an optical beam being incident thereon, including:

    a first hologram (10a1) receiving a first optical beam that passes through a first base point (13) and passes through a first region defined by a beam diameter of an incident beam to be incident on said hologram element;

and
a second hologram (10a2) receiving a second optical beam that passes through said first base point (13) and passes through a second region defined by a beam diameter of an incident beam to be incident on said hologram element, wherein
a first diffracted beam diffracted by said first hologram (10a1) passes through a second base point (14) and passes through a third region defined by a beam diameter of said first diffracted beam, and
a second diffracted beam diffracted by said second hologram (10a2) passes through said second base point (14) and passes through a fourth region defined by a beam diameter of said second diffracted beam.

15. An information recording apparatus (10) recording on a hologram recording medium (130) interference fringes of a signal beam and a record reference beam by an angular multiplex-recording scheme, comprising:

a light source (105) emitting an optical beam;
a beam splitter (110) splitting said optical beam into a signal beam and a reference beam;
a spatial light modulator (119) providing information to said signal beam;
an objective lens (124) collecting said signal beam on said hologram recording medium; and
a deflection optical unit (100) deflecting said reference beam corresponding to recording angles of angular multiplex-recording and collecting said reference beam on said hologram recording medium, wherein said deflection optical unit (100) includes
a hologram element (102) irradiating a prescribed position in said hologram recording medium with an incident beam as said record reference beam irrespective of an incident position of said incident beam; and
an angle rotation mirror (101) angularly rotating thereby reflecting the optical beam to each region of said hologram element.

16. The information recording apparatus according to claim 15, wherein
an irradiation area of said prescribed position with said reconstructed beam is constant irrespective of an emission angle from said hologram element (102).

17. An information reconstructing apparatus (10) reconstructing information by a reconstruction reference beam from a hologram recording medium (130) on which interference fringes of a signal beam and a record reference beam have been recorded by an angular multiplex-recording scheme, comprising
a deflection optical unit (100) deflecting said reference beam corresponding to recording angles of angular multiplex-recording and collecting said reference beam on said hologram recording medium, wherein said deflection optical unit (100) includes
a hologram element (102) irradiating a prescribed position in said hologram recording medium with an incident beam as said reconstruction reference beam irrespective of an incident position of said incident beam; and
an angle rotation mirror (101) rotating an angle thereby reflecting the light beam to each region of said hologram element.

18. The information reconstructing apparatus according to claim 17, wherein
an irradiation area of said prescribed position with said reconstructed beam is constant irrespective of an emission angle from said hologram element (102).

FIG.1

1

FIG.2

102

11b

13

α1

10d  10b2  10a2

10c    10b1  10a1

β1

12b

14

FIG.3

# FIG.4

102

# FIG.5

<u>102</u>

## FIG.6

FIG.7

# FIG.8

# FIG.9

## FIG.10

FIG.11

# FIG.12

FIG.13

FIG.14

FIG.15

FIG.16

(A)

(B)

(C)

FIG.17

1000

1001

1005p

1005

1002

1003

1006

1007

1008

**EP 2 061 029 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007156460 A
- JP 2008072018 A
- JP 2006078942 A

**Non-patent literature cited in the description**

- **J. ASHLEY et al.** Holographic Data Storage. *IBM, J. RES. DEVELOP,* May 2000, vol. 44 (3